# FASCICULE DE BREVET EUROPEEN

(11) **EP 3 430 226 B1**
(45) Date de publication et mention de la délivrance du brevet: **18.10.2023**
(21) Numéro de dépôt: 17709923.1
(22) Date de dépôt: 23.02.2017
(51) Int. Cl.: B32B 17/06, E06B 3/663

(54) **VITRAGE ISOLANT AVEC ESPACEUR EN VERRE, NOTAMMENT POUR MEUBLE CLIMATIQUE**
ISOLIERVERGLASUNG MIT GLASABSTANDSHALTER, INSBESONDERE FÜR KLIMAKONTROLLIERTE EINHEIT
INSULATING GLAZING WITH GLASS SPACER, NOTABLY FOR CLIMATE -CONTROLLED UNIT

(30) Priorité: 18.03.2016 FR 1652348
(43) Date de publication de la demande: 23.01.2019
(73) Titulaire: SAINT-GOBAIN GLASS FRANCE, 92400 Courbevoie (FR)
(72) Inventeur: BAQUET, Erwan, 60200 Compiègne (FR); DECOURCELLE, Romain, 60280 Margny lès Compiègne (FR); JONVILLE, Edouard, 92400 Courbevoie (FR)
(74) Mandataire: Saint-Gobain Recherche
(86) Numéro de dépôt international: PCT/EP2017/054179
(87) Numéro de publication internationale: WO 2017/157636

(56) Documents cités:
- EP-A1- 2 456 942

## Description

L'invention concerne un vitrage isolant destiné à un ouvrant d'enceinte/meuble climatique, en particulier réfrigéré, comportant au moins deux feuilles de verre espacées par au moins une lame d'air ou de gaz à l'aide d'au moins un espaceur agencé à la périphérie des feuilles de verre, au moins un espaceur transparent en verre étant disposé sur l'un des côtés du vitrage.

L'invention est également relative au procédé de fabrication d'un tel vitrage.

L'invention sera plus particulièrement décrite en regard d'une application de meuble/vitrine réfrigérée, sans toutefois y être limitée. Le vitrage de l'invention peut être utilisé dans toutes applications de bâtiment, vitrage extérieur, vitrage d'intérieur, cloison, etc.

Parmi les espaceurs, on distingue ceux en matière synthétique, en matière organique et ceux en verre.

La présente invention concerne exclusivement les espaceurs en verre.

Une enceinte climatique est plus particulièrement destinée à constituer un meuble à froid positif ou un meuble à froid négatif dans lequel sont exposés des produits réfrigérés ou respectivement surgelés, tels que des produits alimentaires ou boissons, ou tous autres produits nécessitant une conservation dans le froid, par exemple des produits pharmaceutiques ou des fleurs.

Si la commercialisation des produits congelés se fait de plus à plus à l'aide de meubles pourvus de portes, dites « froides », à vitrages isolants transparents, la commercialisation des produits alimentaires frais et ultrafrais en libre service se fait aujourd'hui essentiellement au moyen de meubles verticaux ouverts dans les magasins. Dotés d'un rideau d'air réfrigéré en face avant pour isoler les denrées alimentaires de l'ambiance chaude du magasin et les maintenir à la température de conservation optimale, ces meubles sont plutôt performants de ce point de vue et offrent un accès direct aux produits en l'absence de barrière physique, facilitant l'acte d'achat.

Cependant l'absence de barrière physique sur ces meubles verticaux à froid positif entraîne un échange thermique important entre l'ambiance du magasin et l'ambiance beaucoup plus froide générée à l'intérieur de ces meubles, ce qui engendre les conséquences suivantes:
- cet échange thermique doit être compensé par une production de froid plus importante afin de garantir les températures optimales pour la conservation des aliments dans le meuble, ce qui accroît de manière néfaste la consommation énergétique de ces meubles;
- l'ambiance du magasin est considérablement refroidie localement (phénomène d'allée froide), ce qui conduit les consommateurs à limiter leur passage dans ces rayons pour les achats essentiels en délaissant les achats d'impulsion. Ce refroidissement local des allées concernées est d'autant plus accentué depuis ces dernières années que le renforcement des règles sanitaires a conduit à baisser encore la température de conservation des aliments;
- l'air humide de l'ambiance du magasin est drainé par le rideau d'air froid en face avant du meuble, ce qui conduit à une saturation rapide de l'échangeur de froid du meuble (appelé aussi évaporateur) qui se retrouve pris en glace, diminuant alors significativement l'efficacité de l'échange thermique. Il est donc nécessaire de procéder à des séquences de dégivrages fréquentes de l'évaporateur, typiquement deux fois par jour, ce qui entraîne une consommation énergétique accrue et engendre des frais.

Face à ces inconvénients, les constructeurs de meubles ont tenté d'apporter des réponses, en optimisant notamment les rideaux d'air et en réchauffant les allées par des cassettes rayonnantes ou soufflantes à air chaud. Ce progrès reste néanmoins limité quant au confort des clients, et cela au détriment de la consommation énergétique. En effet, l'énergie calorifique produite par ces systèmes de chauffage qui sont gourmands en énergie se retrouve en partie dans les meubles, ce qui conduit au final à une consommation énergétique encore plus importante pour réfrigérer ces meubles.

La mise en place de portes froides conventionnelles sur ces meubles ouverts permet de répondre efficacement à ces inconvénients. Ces solutions largement éprouvées en froid négatif pour des produits congelés, peinent cependant à se développer pour le froid positif. Il est reproché à ces portes de mettre une barrière physique entre le consommateur et le produit en libre service, pouvant générer des conséquences négatives potentielles sur les ventes.

En outre, ces ouvrants sont réalisés suivant une conception proche des fenêtres pour le bâtiment : un double ou triple vitrage est encadré sur l'ensemble de sa périphérie au moyen d'un cadre fait de profilés, généralement en aluminium anodisé pour des raisons d'esthétique, de résistance au vieillissement et de facilité de fabrication. Le cadre est généralement collé directement sur la périphérie et sur les faces externes du vitrage ; il participe à la rigidité de la structure et permet de masquer à la vue les moyens intercalaires (espaceurs) disposés à la périphérie du vitrage et séparant les feuilles de verre.

Cependant un tel cadre structurel réduit de façon significative le clair de vue au travers du vitrage.

Il a alors été proposé pour améliorer le clair de vue au travers des vitrages, de fabriquer des vitrages isolants avec des espaceurs transparents au moins au niveau de leurs côtés verticaux, engendrant en outre une perception visuelle de continuité transparente de surface sur l'ensemble des vitrines réfrigérées accolées les unes aux autres. Un tel vitrage avec des espaceurs transparents est par exemple divulgué dans EP-A-2456942.

Aujourd'hui, le procédé de fabrication d'un vitrage avec espaceur en verre consiste à découper un barreau de verre de section carrée ou rectangulaire et de forte épaisseur de l'ordre de 15 mm (en particulier 14,7 mm). On entend par « épaisseur » dans la suite de la description, la dimension s'étendant dans un plan parallèle aux surfaces générales de feuilles de verre en position montée de l'espaceur, c'est-à-dire la dimension s'étendant depuis le chant des feuilles de verre vers l'intérieur du vitrage.

Quant à la « largeur » de l'espaceur, elle correspond à la dimension séparant les deux feuilles de verre en position montée de l'espaceur.

On rappelle que de manière générale, différentes techniques de découpe de verre existent :
- la technique la plus courante est celle combinée du traçage, par exemple via une molette en diamant, et du rompage ; cette technique est utilisée pour les verres d' épaisseur 1 à 19 mm ;
- la technique de découpe par jet d'eau qui permet de découper des verres de plus grosses épaisseurs;
- la technique par découpe laser qui permet des découpes parfaitement propres mais qui est très peu industrialisée et n'est pas utilisée dans la fabrication des vitrages isolants car trop onéreuse.

La découpe par traçage/rompage présente l'inconvénient de générer des spliures, ne procurant pas un état de surface propre et lisse du chant découpé.

Or pour éviter toutes distorsions visuelles dans un vitrage isolant avec espaceur en verre, au niveau de l'interface de liaison entre l'espaceur et les feuilles de verre, les faces de l'espaceur rendues solidaires des feuilles de verre doivent présenter un état de surface parfaitement lisse.

En outre, le rompage engendre, notamment en début et fin de la ligne de découpe, une légère oblicité du chant du verre découpé ; le chant n'est pas parfaitement orthogonal aux plans des faces générales de la feuille de verre découpée. L'angle que fait la génératrice oblique du chant découpé avec le plan orthogonal aux faces générales du verre est appelé angle de rompage, qui est donc en réalité différent de 90°. Cet angle de rompage n'est pas envisageable dans le cas d'un espaceur en verre usuel d'épaisseur 15 mm, la surface qui doit être rendue solidaire des feuilles de verre devant être parfaitement parallèle aux feuilles de verre.

Aussi, les espaceurs actuels en verre pour vitrages isolants sont obtenus à partir de la technique de découpe au jet d'eau de manière à garantir une surface d'association avec les feuilles de verre parfaitement parallèle aux feuilles de verre (donc une surface parfaitement orthogonale aux autres faces de l'espaceur)

Cependant, cette technique par découpe au jet d'eau présente quelques inconvénients :
- elle nécessite de fabriquer en amont des épaisseurs de verre spécifiques de 15 mm (précisément de 14,7 mm) ;
- elle est de manipulation complexe, prend du temps et met en oeuvre des moyens techniques spécifiques au sein d'un environnement de travail qui doit en outre être adapté à ces moyens ;
- elle génère un état de surface rugueux dû aux marques de jet ; les faces de l'espaceur découpées sont celles se retrouvant au niveau du chant du vitrage et de la lame de gaz, car les autres faces n'ayant pas subi la découpe sont celles destinées à être associées aux feuilles de verre de par leur surface parfaitement lisse. Or, les faces rugueuses qui sont celles se retrouvant transversalement aux feuilles de verre engendrent un aspect mat de la surface verrière, ne procurant pas l'effet de transparence souhaité lorsque l'on regarde le vitrage légèrement en perspective

L'invention a donc pour but de réaliser un vitrage isolant notamment pour meuble climatique qui obvie aux différents inconvénients énoncés précédemment, en choisissant un espaceur en verre qui facilite le procédé de fabrication de l'espaceur et du vitrage isolant en découlant, qui permette de gagner encore en clair de vue du vitrage, tout en assurant l'étanchéité souhaitée, et présente l'avantage supplémentaire de réduire encore les ponts thermiques.

Selon l'invention, le vitrage isolant destiné à un ouvrant d'enceinte/meuble climatique, en particulier réfrigéré, comporte au moins deux feuilles de verre (sensiblement parallèles), espacées par au moins une lame d'air ou de gaz, au moins un espaceur transparent en verre agencé à la périphérie des feuilles de verre et maintenant espacées et parallèles les deux feuilles de verre, et des moyens de fixation par collage transparents fixant l'espaceur à chaque feuille de verre par deux de ses faces opposées dites faces de fixation, et est caractérisé en ce que l'espaceur en verre est issu d'une découpe de feuille de verre à l'état brut, et assemblé aux feuilles de verre directement à l'état brut, et en ce que les moyens de fixation par collage consistent en un matériau transparent ayant été disposé à la jonction externe de l'espaceur et des feuilles de verre et ayant flué dans les aspérités du verre des faces de fixation de l'espaceur.

L'espaceur étant issu d'une découpe de feuille de verre à l'état brut, il présente une section carrée ou rectangulaire (sans chanfrein).

L'espaceur en verre présente une épaisseur inférieure à 8 mm ou à 10 mm, en particulier d'épaisseur comprise entre 4 et 6 mm.

Selon l'invention, le vitrage isolant destiné à un ouvrant d'enceinte/meuble climatique, en particulier réfrigéré, comporte au moins deux feuilles de verre (sensiblement parallèles), espacées par au moins une lame d'air ou de gaz, au moins un espaceur transparent en verre agencé à la périphérie des feuilles de verre et maintenant espacées et parallèles les deux feuilles de verre, et des moyens de fixation par collage transparents fixant l'espaceur à chaque feuille de verre par deux de ses faces opposées dites faces de fixation, et est caractérisé en ce que l'espaceur en verre présente une épaisseur inférieure à 8 mm ou 10 mm, en particulier d'épaisseur comprise entre 4 et 6 mm, et en ce que les moyens de fixation par collage consistent en un matériau transparent disposé à la jonction externe de l'espaceur et des feuilles de verre et ayant flué dans les aspérités éventuelles du verre des faces de fixation de l'espaceur.

On entend par « externe » dans la suite de la description, ce qui est extérieur au volume en contact avec la lame de gaz, ce volume étant par contre qualifié d'« interne ».

On entend par «transparent » dans l'expression « espaceur transparent », qui permet au moins de voir des couleurs, des formes à travers, sans nécessairement pouvoir lire un texte derrière l'espaceur transparent. L'espaceur est issu d'une découpe de feuille de verre à l'état brut, et assemblé aux feuilles de verre directement à l'état brut. On qualifie de découpe « à l'état brut », une découpe qui ne subit ensuite aucun polissage ou autre action mécanique de changement de surface. Notamment, l'espaceur en verre ne subit aucune étape supplémentaire de découpe telle que pour chanfreiner l'espaceur.

La découpe est réalisée par une technique autre que la technique de découpe à jet d'eau. Une telle épaisseur réduite de l'espaceur permet de limiter très fortement l'impact visuel de l'espaceur.

Une épaisseur réduite de l'espaceur s'entend par rapport aux fortes épaisseurs de l'art antérieur de 12 mm ou plus. Une épaisseur de 12 mm ou plus nécessite une découpe au jet d'eau ce que ne fait nullement l'invention. Au contraire, l'invention utilise une épaisseur réduite, donc inférieure à l'épaisseur de l'art antérieur, en particulier inférieure à 10 mm, une épaisseur inférieure à 10 mm pouvant être découpée au laser ou par traçage-rompage. En outre, l'épaisseur étant diminuée, sa masse est également diminuée, ce qui engendre un pont thermique nettement plus faible que par un espaceur usuel de l'art antérieur.

Par ailleurs, malgré la faible épaisseur de l'espaceur, l'espaceur combiné à la présence du matériau de collage non seulement à la ligne de jonction de l'espaceur et des feuilles de verre mais également dans les aspérités du verre au niveau des faces de fixation de l'espaceur assure la résistance mécanique requise au regard des risques de chocs que pourraient subir le vitrage isolant. Le matériau de collage présente une résistance adaptée à l'effort de traction, de préférence le matériau de collage présente une résistance à des contraintes de traction supérieures à 2,2 Mpa.

Le vitrage n'a pas nécessité de comprendre une couche d'interface homogène de collage entre les faces de fixation de l'espaceur et les feuilles de verre, car les moyens de collage choisis permettent de combler les défauts de surface de verre engendrés lors de la découpe et de se répartir suffisamment pour assurer la fixation.

L'espaceur en verre est issu de la découpe de verre, notamment de verre float, d'épaisseur inférieure à 8 ou 10 mm, la découpe ayant été faite de préférence par la technique de traçage-rompage, ou encore par découpe laser.

Le verre de l'espaceur est de préférence un verre monolithique.

Selon une autre caractéristique, l'espaceur en verre est issu de la découpe de verre dont l'épaisseur est celle des feuilles de verre constitutives du vitrage.

Par conséquent, l'étape amont de préparation de l'espaceur en verre est simple, usuelle, s'opérant dans les mêmes conditions que celle de préparation des feuilles de verre, et ne nécessitant donc pas les moyens complexes de l'art antérieur qui utilisent par exemple une découpe par jet d'eau.

L'espaceur en verre de l'invention est utilisé et agencé entre les feuilles de verre via ses faces de fixation qui correspondent à ses chants découpés, à l'état brut après découpe sans étape de finition telle que par polissage desdits chants, les moyens de fixation par collage de l'espaceur aux feuilles de verre comblant avantageusement les aspérités et défauts de planéité des chants de verre découpés.

De manière inattendue, les inventeurs ont mis en évidence qu'un espaceur mince en verre, combiné aux moyens de collage ayant flué dans les aspérités des faces de fixation, suffit à assurer la fixation de l'espaceur aux feuilles de verre, et surtout que les moyens de collage transparents en comblant les aspérités assurent une continuité de l'indice optique de réfraction de l'ensemble espaceur-moyens de collage, annihilant l'impact visuel des aspérités et défauts présents sur les faces de fixation engendrés par la découpe, en particulier de la découpe par traçage-rompage.

Selon une autre caractéristique, les moyens de fixation par collage sont constitués d'un matériau transparent de collage ayant un indice de réfraction identique ou proche de celui du verre, ce qui garantit la continuité de l'indice optique au travers des feuilles de verre, de l'espaceur et des moyens de collage, procurant pour une personne regardant légèrement en perspective le vitrage ou même plusieurs vitrages accolés les uns aux autres, une continuité de transparence sans distorsion visuelle.

On entend par « proche de celui du verre » pour l'indice de réfraction, une tolérance de plus ou moins 30% par rapport à l'indice du verre.

Le matériau transparent de collage est un matériau qui réticule sous ultraviolets (UV) ou non, de préférence rapidement (au plus quelques minutes).

Le matériau transparent de collage présente une viscosité adaptée pour se disperser par capillarité dans les aspérités présentes dans le verre au niveau des faces découpées de l'espaceur, de préférence une viscosité comprise entre 300 mPa.s et 900 mPa.s, de préférence de l'ordre de 600 mPa.s.

Avantageusement, le matériau transparent de collage est choisi pour constituer également une barrière d'étanchéité au moins à l'eau, et de préférence à l'eau et aux gaz et la vapeur d'eau, en particulier est fait de résine acrylate ou de résine époxy.

A titre d'exemple préféré, le matériau transparent de collage est une résine acrylate, tel que la colle UV Verifix B 678 fournie par la société BOHLE qui est réticulable sous UV. Cette colle possède une viscosité moyenne (600 mPa.s), et offre une bonne capacité de capillarité et d'étanchéité à l'eau, et aux gaz et la vapeur d'eau.

Les moyens de fixation par collage présentent une épaisseur au niveau de la ligne de jonction externe de l'espaceur et de chaque feuille de verre de quelques micromètres à 1 mm, de préférence quelques micromètres à 0,5 mm au plus.

L'invention est également relative à un procédé de fabrication d'un vitrage isolant de l'invention, comprenant une étape de préparation de l'espaceur et une étape d'assemblage de l'espaceur aux feuilles de verre, dans lequel l'étape de préparation consiste à découper au moins une bande de verre de largeur équivalente à celle devant séparer les feuilles de verre (par exemple de 12, 15 ou 20 mm), dans un substrat verrier d'épaisseur inférieure à 8 ou 10 mm, en particulier comprise entre 4 et 6 mm, et d'associer à l'état brut cette bande de verre via les chants découpés, aux feuilles de verre avec des moyens de collage dont le matériau est apte à fluer dans l'interface entre lesdits chants découpés de l'espaceur et les feuilles de verre, et dans les aspérités du verre des chants découpés.

Selon une caractéristique, l'étape de préparation comporte une découpe de plusieurs bandes de verre. Ces bandes de verre serviront à un même vitrage ou plusieurs vitrages. Selon une caractéristique, l'étape d'assemblage comporte la mise à plat d'une feuille de verre, la disposition de l'espaceur le long d'un côté de la feuille de verre en appliquant l'un des chants découpés de la bande de verre contre la face générale accessible de la feuille de verre et proche de la tranche de la feuille de verre, notamment à au plus 5 mm de la tranche, de préférence à au plus 1 mm de la tranche, le maintien en place provisoire de l'espaceur (par exemple grâce à des serre-joints), l'application d'un matériau transparent de collage à la jointure externe de l'espaceur et de la feuille de verre, disposition de l'autre feuille de verre contre l'autre chant découpé de l'espaceur et parallèlement et parfaitement en regard de la première feuille de verre, et application du matériau transparent de collage à la jointure externe de l'espaceur et de la seconde feuille de verre.

Selon une autre caractéristique, le vitrage est un double vitrage ou triple vitrage.

Le vitrage peut avantageusement être pourvu sur ses feuilles de verre d'un ou de plusieurs revêtement(s) bas-émissif(s) et/ou d'une couche anti-buée ou anti-givre, évitant ainsi des moyens de chauffage usuels, ce qui participe à une économie d'énergie.

Enfin, l'invention est relative d'une part à un ouvrant comprenant un vitrage selon l'invention, et d'autre part à un meuble climatique, du type meuble réfrigéré, comportant au moins un ouvrant ou un vitrage de l'invention, ou une pluralité de vitrages accolés verticalement les uns aux autres, le ou les espaceurs transparents étant disposés verticalement en position montée du ou des vitrages.

La présente invention est maintenant décrite à l'aide d'exemples uniquement illustratifs et nullement limitatifs de la portée de l'invention, et à partir des illustrations ci-jointes, dans lesquelles :
- La figure 1 illustre une vue schématique en perspective d'une façade d'un meuble réfrigéré intégrant une pluralité de vitrages de l'invention ;
- La figure 2 est une vue partielle en perspective d'un vitrage de l'invention ;
- La figure 3 est une vue en coupe d'un espaceur selon l'invention ;
- La figure 4 est une vue partielle en coupe du vitrage de l'invention avec l'espaceur de la figure 3 sans la présence des moyens de collage ;
- La figure 5 représente la vue de la figure 4 avec les moyens de collage, ce qui constitue le vitrage de l'invention.

Les figures ne sont pas à l'échelle pour en faciliter la lecture.

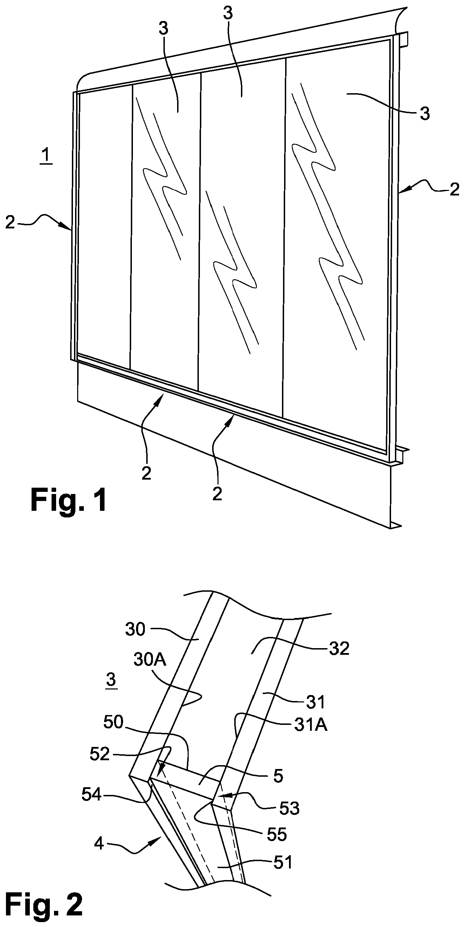

Le meuble climatique 1 illustré schématiquement sur la figure 1 comporte une pluralité d'ouvrants 2 comprenant chacun un vitrage isolant 3 conforme à l'invention.

Le meuble constitue par exemple un meuble réfrigéré à froid positif destiné à être installé le long d'une allée de magasin. On peut ainsi constituer selon l'invention un meuble avec toute une rangée d'ouvrants aboutés latéralement les uns aux autres verticalement selon leur tranche.

Dans le cas d'un meuble/d'une vitrine à froid positif, l'étanchéité étant moins critique que pour un meuble à froid négatif, l'ouvrant de l'invention comportant le vitrage isolant de l'invention n'a pas besoin de comprendre de montants verticaux formant cadre et pourvus de joints épais à la jonction de deux ouvrants/vitrages aboutés. Le vitrage de l'invention permet ainsi par la transparence de ses bords verticaux de procurer une surface transparente continue lorsque les vitrages sont accolés par leur tranche.

Chaque vitrage isolant comporte au moins deux feuilles de verre maintenues parallèlement espacées par un cadre dont les parties opposées verticales en position montée du vitrage sont transparentes.

La façade des vitrages et donc du meuble est ainsi épurée de tout cadre structurel et présente un aspect lisse de paroi de verre. On gagne de cette manière en espace de vision. Seul sera décrit ci-après la partie verticale transparente du cadre du vitrage et correspondant à l'invention, les parties horizontales étant généralement formées par des moyens usuels d'intercalaire et de moyens d'étanchéité qui ne sont pas transparents. De même, ne sera pas décrit l'ouvrant qui intègre le vitrage, les moyens d'articulation, les profilés de support et de cache de moyens d'articulation, le type de poignée.

La figure 2 illustre une vue partielle en perspective du vitrage isolant 3 montrant la partie intérieure verticale transparente 4 du cadre. Le vitrage isolant illustré est un double vitrage avec deux feuilles de verre. Dans le cas d'un triple vitrage avec trois feuilles de verre, le vitrage comprendrait deux parties transparente 4 de l'invention.

Le vitrage 3 comporte deux feuilles de verre 30 et 31 parallèles et espacées au moyen d'un élément intercalaire ou espaceur 5.

Les feuilles de verre 30 et 31 sont de préférence en verre trempé. L'épaisseur de chacune des feuilles de verre est comprise entre 2 et 5 mm, et est de préférence de 3 ou 4 mm afin de minimiser le poids global du vitrage et d'optimiser la transmission lumineuse.

Les feuilles de verre sont séparées entre elles par l'espaceur 5 pour ménager entre elles un volume formant une lame de gaz 32.

La lame de gaz 32 présente une épaisseur d'au moins 4 mm et est adaptée en fonction des performances souhaitées du coefficient de transfert thermique U, sans être toutefois supérieure à 16 mm, voire 20 mm.

La lame de gaz est constituée d'air ou de préférence, pour renforcer le niveau d'isolation du vitrage, d'un gaz rare, choisi parmi l'argon, le krypton, le xénon, ou d'un mélange de ces différents gaz, selon un taux de remplissage d'au moins 85%. Pour un coefficient U encore amélioré, il sera préféré un remplissage avec au moins 92% de krypton ou de xénon.

L'espaceur 5 est entièrement en verre.

L'espaceur 5 est de forme générale parallélépipédique et comprend quatre faces, une face dite interne 50 en regard de la lame de gaz, une face opposée externe 51 en regard de l'extérieur du vitrage et deux faces dites face de fixation 52 et 53 en regard des feuilles de verre respectifs 30 et 31.

L'espaceur 5 s'étend en longueur, ici de manière non représentée, sur toute la longueur de chacun des côtés au moins verticaux du vitrage pour l'application visée de meuble réfrigéré. L'espaceur présente une largeur, dimension transversale aux faces générales des feuilles de verre, équivalente à l'écartement souhaité des feuilles de verre.

Selon l'invention l'espaceur 5 présente une épaisseur, distance séparant les faces interne 50 et externe 51, qui est inférieure à 8 ou 10 mm, de préférence égale à l'épaisseur d'une feuille de verre classique pour vitrage isolant, soit 4 ou 6 mm.

L'espaceur 5 est fixé par collage via ses lignes de jonction externe 54 et 55 reliant les faces de fixation 52 et 53 et les faces internes respectives 30A et 31A des feuilles de verre 30 et 31.

Selon l'invention, l'espaceur en verre est issu de la découpe de verre, en particulier de verre float servant à fabriquer les feuilles de verre d'un vitrage.

De préférence, la découpe de l'espaceur est réalisée par la technique de traçage-rompage. Cette étape amont du procédé de fabrication du vitrage isolant de l'invention permet d'être avantageusement réalisé dans les mêmes conditions que celles de découpe des feuilles de verre.

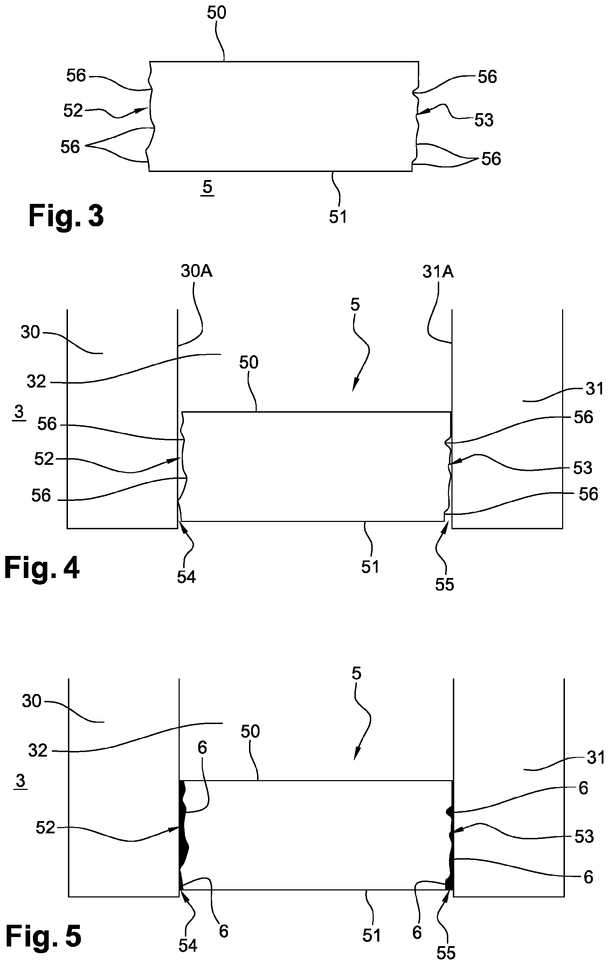

L'espaceur illustré sur la figure 3 présente une épaisseur de 4 mm, égale à celle des feuilles de verre 30 et 31. Comme il est issu de verre float, ses faces opposées parfaitement parallèles correspondront aux faces interne 50 et externe 51 en position assemblée de l'espaceur, tandis que les chants découpés du verre correspondront aux faces de fixation 53 et 54.

De par la technique de découpe, les chants 52 et 53 ne sont pas parfaitement plans comme illustré sur la figure 3, mais présentent des défauts de planéité usuellement appelés spliures, avec des aspérités 56 qui sont amplifiées sur la figure pour la compréhension. Les aspérités ont des dimensions très petites, de l'ordre de 0,5 mm, voire moins.

Selon l'invention, l'espaceur est assemblé aux feuilles de verre à l'état brut après découpe, tel qu'illustré sur la figure 3, sans étape de finition du type polissage desdits chants.

La figure 4 est une vue en coupe schématique du vitrage de l'invention avec l'espaceur de la figure 3, sans la présence des moyens de collage pour mieux percevoir le défaut de planéité de l'espaceur et que la surface des faces de fixation n'est pas parfaitement lisse et parallèle à chacune des faces internes 30A et 31A des feuilles de verre.

Selon l'invention, les moyens de collage 6 illustrés sur la figure 5 sont tels qu'ils sont disposés au niveau des lignes de jointure 54 et 55 de la face externe de l'espaceur et des feuilles de verre, et dans les aspérités 56 des faces de fixation 52 et 53 de l'espaceur.

Les moyens de collage 6 sont faits d'un matériau apte à fluer lors de son dépôt sur le verre. En particulier, le matériau possède une viscosité comprise entre 300 mPa.s et 900 mPa.s.

Ainsi, l'épaisseur de matériau disposé sur les lignes de jointure 54 et 55 est minimisé, notamment n'excède pas 1 mm, de préférence n'excède pas 0,5 mm, sur les faces des feuilles de verre au niveau des dites lignes de jointure. En outre, le matériau s'est agencé à l'interface des faces de fixation 53 et 54 et des faces 30A et 31A des feuilles de verre, en remplissant les aspérités 56, de sorte à réaliser un revêtement extrêmement mince de collage quasiment imperceptible à l'œil nu.

Le matériau des moyens de collage 6 est un matériau de collage transparent ayant un indice de réfraction identique ou proche de celui du verre.

Le matériau est apte à réticuler rapidement. Il réticule par exemple sous ultraviolets.

Le matériau des moyens de collage est constitué d'un matériau possédant des propriétés d'étanchéité au moins à l'eau, et de préférence à l'eau et aux gaz et la vapeur d'eau, en particulier est constitué de résine acrylate ou de résine époxy

Le matériau de collage pris pour l'exemple de l'invention (nullement limitatif) et réunissant toutes les propriétés ci-dessus est une résine acrylate, la colle UV Verifix B 678 fournie par la société BOHLE.

Le procédé de fabrication du vitrage de l'invention est le suivant au regard de la fabrication de l'espaceur et de son assemblage :
- Découpe de plusieurs bandes de verre dans un substrat verrier de 4 ou 6 mm d'épaisseur par la technique de traçage-rompage, les bandes de verre correspondant à la largeur de séparation des feuilles de verre du vitrage ;
- De préférence, découpe transversale de chaque bande de verre aux extrémités du début et de fin de coupe des bandes ;
- Découpe transversale d'une bande à la longueur souhaité pour réaliser l'espaceur, la longueur correspondant à la longueur d'un côté du vitrage ;
- Mise à plat d'une première feuille de verre ;
- Agencement de l'espaceur sur la face interne de la feuille de verre via l'un des chants découpés longitudinaux de la bande de verre ;
- Maintien provisoire de l'espaceur, par exemple par un serre-joint ;
- Dépôt des moyens de collage à la ligne de jointure de l'espaceur et de la feuille de verre du côté externe de l'espaceur, fluage des moyens de collage dans les aspérités ;
- Séchage de la colle par exemple par ultraviolets si les moyens de collage sont réticulables aux ultraviolets ;
- Agencement de la seconde feuille de verre parfaitement en regard et parallèlement à la premier feuille de verre et en l'apposant sur le second chant découpé de l'espaceur ;
- Maintien provisoire de la feuille de verre, par exemple par des serre-joints ;
- Dépôt des moyens de collage à la ligne de jointure de l'espaceur et de la seconde feuille de verre du côté externe de l'espaceur, fluage des moyens de collage dans les aspérités ;
- Séchage de la colle ;
- Retrait des moyens de maintien provisoire.

Par conséquent, le procédé de l'invention est simple de mise en oeuvre, utilise la technique de découpe classique du verre peu épais, et l'espaceur de l'invention ainsi réalisé à l'état brut, combiné aux moyens de collage, permet de réaliser un vitrage isolant dont l'espaceur est transparent, de très faible épaisseur, avec des moyens de collage imperceptible à l'œil nu, ce qui ne perturbe pas l'impression visuelle transparente que l'on doit avoir de l'ensemble du vitrage.

## Revendications

1. Vitrage isolant (3) comportant au moins deux feuilles de verre (30, 31) espacées par au moins une lame d'air ou de gaz (32), au moins un espaceur transparent en verre (5) agencé à la périphérie des feuilles de verre et maintenant espacés les deux feuilles de verre, et des moyens de fixation transparents par collage (6) fixant l'espaceur à chaque feuille de verre par deux de ses faces opposées dites faces de fixation (52, 53), **caractérisé en ce que** l'espaceur en verre (5) est issu d'une découpe de feuille de verre à l'état brut, et assemblé aux feuilles de verre directement à l'état brut, et **en ce que** les moyens de fixation par collage (6) consistent en un matériau transparent ayant été disposé à la jonction externe de l'espaceur et des feuilles de verre et ayant flué dans les aspérités (56) du verre des faces de fixation (52, 53) de l'espaceur et **en ce que** l'espaceur en verre (5) est issu de la découpe, notamment de verre float, d'épaisseur inférieure à 8 ou 10 mm, de préférence la découpe ayant été faite par la technique de traçage-rompage ou laser.

2. Vitrage selon la revendication 1, **caractérisé en ce que** l'espaceur en verre (5) est issu de la découpe de verre dont l'épaisseur est celle des feuilles de verre constitutives du vitrage.

3. Vitrage selon la revendication 1, **caractérisé en ce que** l'espaceur en verre (5) présente une épaisseur inférieure à 8 mm ou à 10 mm, en particulier d'épaisseur comprise entre 4 et 6 mm.

4. Vitrage selon l'une quelconque des revendications précédentes, **caractérisé en ce que** l'espaceur en verre (5) est utilisé et agencé entre les feuilles de verre (30, 31) via ses chants découpés, à l'état brut après découpe sans étape de finition desdits chants.

5. Vitrage selon l'une quelconque des revendications précédentes, **caractérisé en ce que** les moyens de fixation par collage (6) sont constitués d'un matériau transparent de collage ayant un indice de réfraction identique ou proche de celui du verre.

6. Vitrage selon l'une quelconque des revendications précédentes, **caractérisé en ce que** les moyens de fixation par collage (6) sont constitués d'un matériau transparent de collage qui réticule sous ultraviolets ou non, de préférence rapidement.

7. Vitrage selon l'une quelconque des revendications précédentes, **caractérisé en ce que** les moyens de fixation par collage (6) sont constitués d'un matériau transparent choisi pour constituer également une barrière d'étanchéité au moins à l'eau, et de préférence à l'eau et aux gaz et la vapeur d'eau, en particulier est fait de résine acrylate ou de résine époxy.

8. Vitrage selon l'une quelconque des revendications précédentes, **caractérisé en ce que** les moyens de fixation par collage (6) présentent une épaisseur à la ligne de jointure externe (54, 55) de l'espaceur et de chaque feuille de verre de quelques micromètres à 1 mm, de préférence de quelques micromètres à 0,5 mm au plus.

9. Vitrage selon l'une quelconque des revendications précédentes, **caractérisé en ce que** le vitrage est un double vitrage ou triple vitrage, de préférence pourvu d'un ou de plusieurs revêtements bas-émissifs et/ou d'une couche anti-buée ou anti-givre.

10. Ouvrant (2) comportant un vitrage (3) selon l'une quelconque des revendications précédentes.

11. Meuble climatique comportant au moins un ouvrant selon la revendication précédente ou une pluralité de vitrages selon l'une quelconque des revendications 1 à 9, le ou les espaceurs transparents étant disposés verticalement en position montée du ou des vitrages.

12. Procédé de fabrication d'un vitrage isolant (3) selon l'une quelconque des revendications 1 à 9, comprenant une étape de préparation de l'espaceur (5) et une étape d'assemblage de l'espaceur aux feuilles de verre (30, 31), dans lequel l'étape de préparation consiste à découper au moins une bande de verre de largeur équivalente à celle devant séparer les feuilles de verre, dans un substrat verrier d'épaisseur inférieure à 8 mm, en particulier comprise entre 4 et 6 mm, et d'associer à l'état brut cette bande de verre via les chants découpés, aux feuilles de verre avec des moyens de collage dont le matériau est apte à fluer dans l'interface entre lesdits chants découpés de l'espaceur et les feuilles de verre, et dans les aspérités du verre des chants découpés.

13. Procédé selon la revendication précédente, **caractérisé en ce que** l'étape de préparation comporte une découpe de plusieurs bandes de verre.

14. Procédé selon la revendication 12 ou 13 **caractérisé en ce que** l'étape
d'assemblage comporte la mise à plat d'une feuille de verre, la disposition de l'espaceur le long d'un côté de la feuille de verre en appliquant l'un des chants découpés de la bande de verre contre la face générale accessible de la feuille de verre et proche de la tranche de la feuille de verre, notamment à au plus 5 mm de la tranche, de préférence à au plus 1 mm de la tranche, le maintien en place provisoire de l'espaceur, l'application d'un matériau transparent de collage à la jointure externe de l'espaceur et de la feuille de verre, disposition de l'autre feuille de verre contre l'autre chant découpé de l'espaceur et parallèlement et parfaitement en regard de la première feuille de verre, et application du matériau transparent de collage à la jointure externe de l'espaceur et de la seconde feuille de verre.

## Patentansprüche

1. Isolierverglasung (3), umfassend mindestens zwei Glasscheiben (30, 31), die durch mindestens eine Luft- oder Gasschicht (32) voneinander beabstandet sind, mindestens einen transparenten Abstandhalter aus Glas (5), der an dem Umfang der Glasscheiben angeordnet ist und jetzt die zwei Glasscheiben voneinander beabstandet hält, und transparente Mittel zum Befestigen durch Kleben (6), die den Abstandhalter an jeder Glasscheibe, durch zwei seiner gegenüberliegenden Flächen, sogenannten Befestigungsflächen (52, 53), befestigen, **dadurch gekennzeichnet, dass** der Abstandhalter aus Glas (5) aus einem Ausschnitt der Glasscheibe im Rohzustand hervorgeht und an Glasscheiben direkt im Rohzustand verbunden wird, **und dadurch, dass** die Mittel zum Befestigen durch Kleben (6) aus einem transparenten Material, das an dem äußeren Verbindungspunkt des Abstandhalters und den Glasscheiben angeordnet ist und in die Unebenheiten (56) des Glases der Befestigungsflächen (52, 53) des Abstandhalters fließt, besteht, **und dadurch, dass** der Abstandhalter aus Glas (5) aus dem Ausschnitt, insbesondere aus Floatglas, einer Dicke von weniger als 8 oder 10 mm besteht, vorzugsweise wobei der Ausschnitt durch die Markierungs/Brechungs- oder Lasermethode hergestellt wurde.

2. Verglasung nach Anspruch 1, **dadurch gekennzeichnet, dass** der Abstandhalter aus Glas (5) aus dem Ausschnitt des Glases hervorgeht, dessen Dicke diejenige der Glasscheiben ist, aus denen die Verglasung besteht.

3. Verglasung nach Anspruch 1, **dadurch gekennzeichnet, dass** der Abstandhalter aus Glas (5) eine Dicke von weniger als 8 mm oder als 10 mm, insbesondere eine Dicke zwischen 4 und 6 mm, vorweist.

4. Verglasung nach einem der vorstehenden Ansprüche,
**dadurch gekennzeichnet, dass** der Abstandhalter aus Glas (5) zwischen den Glasscheiben (30, 31) über seine ausgeschnittenen Kanten in Rohzustand ach dem Ausschnitt ohne Endbearbeitungsschritt der Kanten verwendet wird und angeordnet ist.

5. Verglasung nach einem der vorstehenden Ansprüche,
**dadurch gekennzeichnet, dass** die Mittel zum Befestigen durch Kleben (6) aus einem transparenten Klebematerial bestehen, das einen Brechungsindex aufweist, der mit demjenigen des Glases identisch ist oder nahe an diesem liegt.

6. Verglasung nach einem der vorstehenden Ansprüche,
**dadurch gekennzeichnet, dass** die Mittel zum Befestigen durch Kleben (6) aus einem transparenten Klebematerial bestehen, das sich unter Ultraviolettstrahlung, vorzugsweise schnell, vernetzt oder nicht.

7. Verglasung nach einem der vorstehenden Ansprüche,
**dadurch gekennzeichnet, dass** die Mittel zum Befestigen durch Kleben (6) aus einem transparenten Material bestehen, das ausgewählt ist, um auch eine Dichtungsbarriere, die insbesondere aus Acrylatharz oder Epoxidharz besteht, mindestens gegen Wasser und vorzugsweise Wasser und Gas und Wasserdampf zu bilden.

8. Verglasung nach einem der vorstehenden Ansprüche,
**dadurch gekennzeichnet, dass** die Mittel zum Befestigen durch Kleben (6) eine Dicke der Linie der äußeren Fuge (54, 55) des Abstandshalters und jeder Glasscheibe von einigen Mikrometern bis 1 mm, vorzugsweise von einigen Mikrometern bis höchstens 0,5 mm, vorweisen.

9. Verglasung nach einem der vorstehenden Ansprüche,
**dadurch gekennzeichnet, dass** die Verglasung eine Doppelverglasung oder eine dreischichtige Verglasung ist, die vorzugsweise mit einer oder mehreren Beschichtungen niedriger Emissivität und/oder einer Antibeschlags- oder Anti-Eisschicht versehen ist.

10. Flügel (2), umfassend eine Verglasung (3) nach einem der vorstehenden Ansprüche.

11. Klimatisches Möbelstück, umfassend mindestens einen Flügel nach dem vorstehenden Anspruch oder eine Vielzahl von Verglasungen nach einem der Ansprüche 1 bis 9, wobei der eine oder die mehreren transparenten Abstandhalter in der montierten Position der einen oder der Verglasungen vertikal angeordnet sind.

12. Verfahren zum Herstellen einer Isolierverglasung (3) nach einem der Ansprüche 1 bis 9, aufweisend einen Schritt des Fertigens des Abstandhalters (5) und einen Schritt des Verbindens des Abstandhalters mit den Glasscheiben (30, 31), wobei der Fertigungsschritt aus dem Ausschneiden mindestens eines Glasstreifens einer Breite gleich derjenigen vor dem Trennen der Glasscheiben, in einem Glassubstrat einer Dicke von weniger als 8 mm, insbesondere zwischen 4 und 6 mm, und einem Vereinigen dieses Glasstreifens im Rohzustand über die ausgeschnittenen Kanten mit den Glasscheiben mit den Klebemitteln, dessen Material geeignet ist, in der Grenzfläche zwischen den ausgeschnittenen Kanten des Abstandhalters und den Glasscheiben und in die Unebenheiten des Glases der ausgeschnittenen Kanten zu fließen, besteht.

13. Verfahren nach dem vorstehenden Anspruch,
**dadurch gekennzeichnet, dass** der Fertigungsschritt einen Ausschnitt mehrerer Glasstreifen umfasst.

14. Verfahren nach Anspruch 12 oder 13 **dadurch gekennzeichnet, dass** der Verbindungsschritt das flache Hinlegen einer Glasscheibe, die Anordnung des Abstandhalters entlang einer Seite der Glasscheibe bei Aufbringen einer der ausgeschnittenen Kanten des Glasstreifens auf die zugreifbare allgemeine Fläche der Glasscheibe und nahe des Rands der Glasscheibe, insbesondere bei höchstens 5 mm von dem Rand, vorzugsweise bei höchstens 1 mm von dem Rand, das provisorische Inpositionhalten des Abstandhalters, die Aufbringung eines transparenten Materials zum Kleben auf die äußere Fuge des Abstandhalters und der Glasscheibe, die Anordnung der anderen Glasscheibe gegen die andere ausgeschnittene Kante des Abstandhalters und parallel und perfekt in Bezug auf die erste Glasscheibe, und die Aufbringung des transparenten Materials zum Kleben an die äußere Fuge des Abstandhalters und die zweite Glasscheibe umfasst.

## Claims

1. An insulating glazing (3) comprising at least two glass sheets (30, 31), which are spaced apart by at least one air- or gas-filled cavity (32), at least one transparent spacer (5) made of glass, which is arranged at the periphery of the glass sheets and which keeps the two glass sheets spaced apart, and transparent means (6) for fastening by adhesive bonding, which fasten the spacer to each glass sheet via two of its opposite faces, which faces are called fastening faces (52, 53), **characterized in that** the spacer (5) made of glass is obtained by the cutting of glass sheet in the raw state, and is joined to the glass sheets directly in the raw state, and **in that** the means (6) for fastening by adhesive bonding consist of a transparent material having been placed at the external junction of the spacer and of the glass sheets and having flowed into the asperities (56) of the glass of the fastening faces (52, 53) of the spacer and **in that** the spacer (5) made of glass is obtained by the cutting, in particular of float glass, of thickness smaller than 8 or 10 mm, the cutting having been made using a scoring-breakage or laser technique.

2. The glazing as claimed in claim 1, **characterized in that** the spacer (5) made of glass is obtained by the cutting of glass the thickness of which is the same as that of the constituent glass sheets of the glazing.

3. The glazing as claimed in claim 1, **characterized in that** the spacer (5) made of glass has a thickness smaller than 8 mm or than 10 mm, and in particular a thickness comprised between 4 and 6 mm.

4. The glazing as claimed in any one of the preceding claims, **characterized in that** the spacer (5) made of glass is used and arranged between the glass sheets (30, 31) via its cut edge faces, in the raw state after cutting without any step of finishing said edge faces.

5. The glazing as claimed in any one of the preceding claims, **characterized in that** the means (6) for fastening by adhesive bonding consist of a transparent adhesive-bonding material having a refractive index identical or close to that of the glass.

6. The glazing as claimed in any one of the preceding claims, **characterized in that** the means (6) for fastening by adhesive bonding consist of a transparent adhesive-bonding material that optionally crosslinks under ultraviolet, preferably rapidly.

7. The glazing as claimed in any one of the preceding claims, **characterized in that** the means (6) for fastening by adhesive bonding consist of a transparent material chosen to also form a barrier that is seal-tight at least to water, and preferably to water and to gases and water vapor, and in particular is made of an acrylate resin or epoxy resin.

8. The glazing as claimed in any one of the preceding claims, **characterized in that** the means (6) for fastening by adhesive bonding have a thickness on the external joint line (54, 55) of the spacer and of each glass sheet of a few microns to 1 mm and preferably of a few microns to 0.5 mm at most.

9. The glazing unit as claimed in any one of the preceding claims, **characterized in that** the glazing is a double glazing or a triple glazing preferably provided with one or more low-E coatings and/or an anti-fog or anti-frost layer.

10. A door (2) comprising a glazing (3) as claimed in any one of the preceding claims.

11. A climate-controlled unit comprising at least one door as claimed in the preceding claim or a plurality of glazings as claimed in any one of claims 1 to 9, the one or more transparent spacers being placed vertically in the mounted position of the one or more glazings.

12. A process for manufacturing an insulating glazing (3) as claimed in any one of claims 1 to 9, comprising a step of producing the spacer (5) and a step of joining the spacer to the glass sheets (30, 31), in which the producing step consists in cutting at least one glass strip of width equivalent to that required to separate the glass sheets, from a glass substrate of thickness smaller than 8 mm, and in particular of thickness comprised between 4 and 6 mm, and associating in the raw state this glass strip, via the cut edge faces, with the glass sheets, with adhesive-bonding means the material of which is able to flow into the interface between said cut edge faces of the spacer and the glass sheets, and into the asperities of the glass of the cut edge faces.

13. The process as claimed in the preceding claim, **characterized in that** the producing step comprises cutting a plurality of glass strips.

14. The process as claimed in claim 12 or 13, **characterized in that** the joining step comprises placing a glass sheet flat, placing the spacer along one side of the glass sheet by applying one of the cut edge faces of the glass strip to the accessible general face of the glass sheet and close to the edge of the glass sheet, in particular at most 5 mm from the edge, and preferably at most 1 mm from the edge, holding the spacer in place temporarily, applying a transparent adhesive-bonding material to the external joint of the spacer and of the glass sheet, placing the other glass sheet against the other cut edge face of the spacer and parallelly and perfectly facing the first glass sheet, and applying the transparent adhesive-bonding material to the external joint of the spacer and of the second glass sheet.
